# EUROPEAN PATENT APPLICATION

(11) **EP 2 995 408 A1**
(43) Date of publication of application: **16.03.2016**
(21) Application number: 15157178.3
(22) Date of filing: 02.03.2015
(51) Int. Cl.: B23D 59/00

(54) **Power circular saw**

(30) Priority: 12.09.2014 JP 2014185805
(71) Applicant: Panasonic Intellectual Property Management Co., Ltd., Osaka-shi, Osaka 540-6207 (JP)
(72) Inventor: Matsumoto, Hiroshi, Osaka 540-6207 (JP)
(74) Representative: Appelt, Christian W.

(57) **Abstract**

A power circular saw (1) includes a motor (6), a circular sawblade (7) driven and rotated by the motor (6), a cutting chip passage (13a; 13a, 13c; 15a, 15b; 16a, 16b) through which cutting chips pass when the circular sawblade (7) performs cutting, and a grip (3) extending in a cutting direction of the circular sawblade (7). The cutting chip passage is configured to traverse a lower side of the grip in a direction intersecting the direction in which the grip extends.

## Description

The present invention relates to a power circular saw.

Atypical power circular saw includes a protection cover that covers the upper side of the circular sawblade to minimize the portion of the sawblade exposed to the user. Japanese Laid-Open Patent Publication No. 2005-169519 describes an example of a power circular saw.

The protection cover of such a power circular saw may include an open portion or a transparent portion so that a user can visually check the edge of the sawblade.

Further, the power circular saw of the above publication includes a dust collector case at one side of the protection cover in the lateral direction to collect cutting chips, which are produced when cutting a workpiece.

The power circular saw includes a base plate. A hole extends through the base plate. The circular saw is inserted through the hole of the base plate. When the dust collector case is arranged on one side of the protection cover, enlargement of the dust collector case increases the amount of the dust collector case projected sideward from the base plate in a plan view. As a result, the dust collector case may come into contact with a workpiece or come into contact with a wall. This would lower the working efficiency.

It is an object of the present invention to provide an electric circular saw that increases the working efficiency.

One embodiment of the present invention is a power circular saw including a motor, a circular sawblade configured to be driven and rotated by the motor, a cutting chip passage through which cutting chips pass when the circular sawblade performs cutting, and a grip extending in a cutting direction of the circular sawblade. The cutting chip passage is arranged to traverse a lower side of the grip in a direction intersecting the direction in which the grip extends.

The electric circular saw according to the present invention increases the working efficiency.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a schematic side view showing one embodiment of a power circular saw;
Fig. 2 is a perspective view of the power circular saw illustrated in Fig. 1;
Fig. 3 is a plan view of the power circular saw illustrated in Fig. 1;
Fig. 4 is a plan view of the power circular saw illustrated in Fig. 1 and a dust collector case attached to the circular saw;
Fig. 5 is a schematic perspective view showing a further example of a power circular saw;
Fig. 6 is a side view of the power circular saw illustrated in Fig. 5;
Fig. 7 is a side view of the power circular saw illustrated in Fig. 5;
Fig. 8 is a plan view showing another example of a power circular saw;
Fig. 9 is a perspective view of the power circular saw illustrated in Fig. 8; and
Fig. 10 is a perspective view of the power circular saw illustrated in Fig. 8.

One embodiment of a power circular saw 1 will now be described.

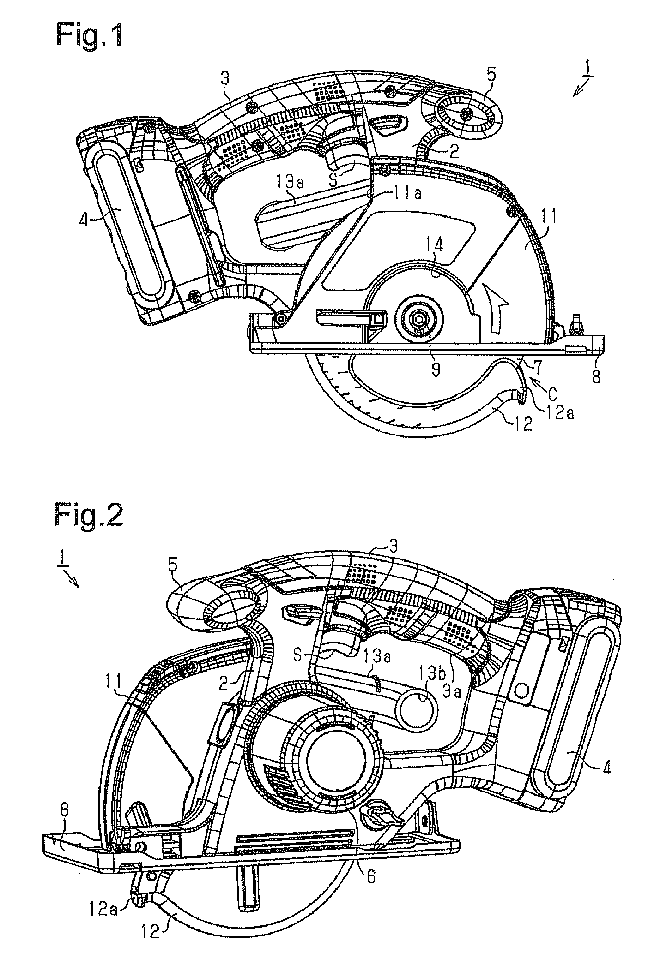

As illustrated in Figs. 1 and 2, a power circular saw 1 has a main body 2 including a curved grip 3, which extends in the longitudinal direction of the circular saw 1. A power supply unit 4, which accommodates a battery (not illustrated), is arranged on the rear end of the grip 3. The distal end of the grip 3 includes a handle 5 so that the user can hold the grip 3 with one hand and hold the handle 5 with the other hand. A motor 6, which serves as a drive source, is coupled to a circular sawblade 7 by a reduction drive (not illustrated), which is arranged in the main body 2. The motor 6 is located on one side (first side) of the main body 2, and the circular sawblade 7 is located on the other side (second side) of the main body 2.

A rotation shaft 9, which extends from the reduction drive, projects from the second side of the main body 2. A base plate 8 is located below the main body 2. The circular sawblade 7 is coupled to the rotation shaft 9, which projects from the main body 2. The circular sawblade 7 is projected through an opening (not illustrated) formed in the base plate 8. Further, the circular sawblade 7 is arranged so that its rotational plane is substantially parallel to the main body 2. The base plate 8 and the main body 2 are pivoted about a pivot shaft (not illustrated) located at the front side of the base plate 8 to adjust the amount of the circular sawblade 7 projected from the opening.

An upper cover 11 and a lower cover 12 each cover the blade edge of the circular sawblade 7 from three sides. In the present embodiment, the upper cover 11 serves as a protection cover. A pipe 13a is arranged at the rear side of the upper cover 11.

The upper cover 11 has a thickness in the axial direction of the rotation shaft 9. Further, the upper cover 11 is box-shaped and includes an open lower end. In the present embodiment, the side wall of the upper cover 11 near the rotation shaft 9 includes a semicircular opening 14. The upper cover 11, which is supported by the main body 2 integrally with the circular sawblade 7, covers the upper side of the circular sawblade 7. More specifically, the upper cover 11 covers the portion of the circular sawblade 7 projecting upward from the base plate 8.

The lower cover 12 has a U-shaped cross-section and is formed to be arcuate in conformance with the circumference of the circular sawblade 7. In the same manner as the upper cover 11, the lower cover 12 is supported by the main body 2 integrally with the circular sawblade 7. The lower cover 12 covers the lower side of the circular sawblade 7. More specifically, the lower cover 12 covers the portion of the circular sawblade 7 projecting downward from the base plate 8.

In the present embodiment, the blade edge of the circular sawblade 7 is exposed from the distal end 12a of the lower cover 12 below the base plate 8. The exposed blade edge functions as a cutting portion C that cuts the workpiece.

During use, the user holds the grip 3 and the handle 5 and positions the cutting portion C (exposed blade edge) of the circular sawblade 7 in contact with a workpiece. The user operates a switch S, which is located on the main body 2, and moves the circular sawblade 7 forward to cut the workpiece.

In this manner, the power circular saw 1 is used by placing the circular sawblade 7 at the front of the power circular saw 1 in contact with a workpiece located below the circular sawblade 7.

In the present embodiment, the lower cover 12 is pivotal about the rotation shaft 9. When pivoted, the rear end of the lower cover 12 is movable into the upper cover. An elastic member (not illustrated) urges the lower cover 12 in a pivot direction in which the distal end 12a moves toward the front side. When cutting a workpiece, the distal end 12a contacts the portion of the workpiece opposing the cutting portion C. When the lower cover 12 is pushed by the workpiece and pivoted, the user is able to acknowledge the cutting depth based on the amount of the lower cover 12 moved into the upper cover 11.

The rear peripheral portion of the upper cover 11 includes a discharge port 11 a that discharges cutting chips, which are produced when the circular sawblade 7 cuts a workpiece, out of the upper cover 11.

In the present embodiment, the front peripheral portion of the upper cover 11 is curved in conformance with the circumference of the circular sawblade 7. The motor 6 is driven to rotate the circular sawblade 7 about the rotation shaft 9 in the counterclockwise direction as viewed in Fig. 1 (direction indicated by arrow in Fig. 1). This generates an airstream flowing along the rotation direction of the circular sawblade 7 in the upper cover 11. The cutting chips produced when cutting a workpiece is drawn into the upper cover 11 by the airstream and discharged out of the power circular saw 1 from the pipe 13a, which is connected to the discharge port 11 a of the upper cover 11.

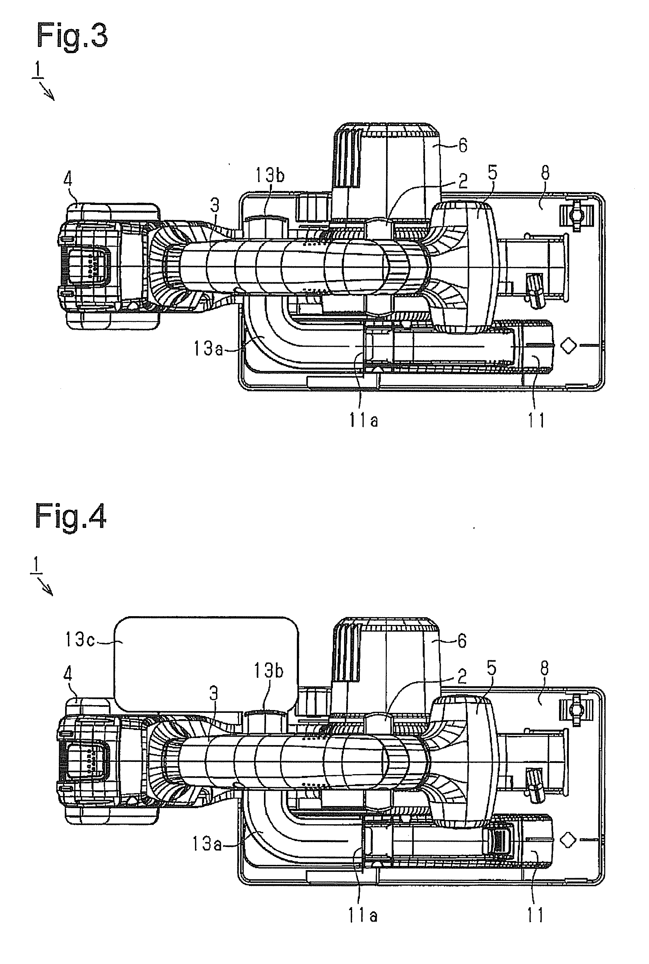

As illustrated in Figs. 2 and 3, the pipe 13a includes two ends that are both open. The pipe 13a is generally L-shaped so that the two open ends extend in directions that are generally orthogonal to each other. The first end of the pipe 13a is connected to the discharge port 11a of the upper cover 11. The pipe 13a extends through an opening 3a under the grip 3 toward the first side of the main body 2 from the second side of the main body 2. Thus, the second end (discharge end) of the pipe 13a is located at the first side of the main body 2.

Referring to Fig. 4, a dust collector case 13c which is, for example, box-shaped is attached to the second end 13b of the pipe 13a. In the present embodiment, the pipe 13a and the dust collector case 13c form a cutting chip passage.

The operation of the power circular saw 1 in the present embodiment will now be described.

The power supply 4 supplies the motor 6 with power and drives the motor 6, and the drive force of the motor 6 rotates the circular sawblade 7. The power circular saw 1 is moved forward with the base plate 8 placed on the workpiece to cut the workpiece.

The power circular sawblade 1 includes the dust collector case 13c, which is connected by the pipe 13a to the upper cover 11. The pipe 13a extends through the opening 3a under the grip 3 toward the first side of the main body 2, which is where the motor 6 is located. Accordingly, the second end 13b (discharge end) of the pipe 13a and the circular sawblade 7 (upper cover 11) are located at opposite sides of the power circular saw 1. This reduces the amount the dust collector case 13c is projected sideward in the lateral direction from the base plate 8. Further, the dust collector case 13c is attached to the second end 13b of the pipe 13a. Thus, even when attaching the large dust collector case 13c, the amount the dust collector case 13c projects sideward from the base plate 8 may be reduced. It is preferred that the size of the dust collector case 13c be such that the dust collector case 13c does not project sideward from the motor 6 (motor case).

The power circular saw 1 in the present embodiment has the advantages described below.
(1) The pipe 13a extends under the grip 3 in a direction intersecting the direction in which the grip 3 extends. This allows the second end 13b of the pipe 13a, to which the dust collector case 13c is attached, to be located at the side of the grip 3 opposite to the upper cover 11 (circular sawblade 7). Thus, even when the dust collector case 13c is attached to the pipe 13a, the pipe 13a and the dust collector case 13c do not project sideward from the base plate 8 at the side where the upper cover 11 (circular sawblade 7) is located. This improves the working efficiency when using the power circular saw 1.
(2) The pipe 13a extends from the discharge port 11a of the upper cover 11, which covers the upper side of the circular sawblade 7. This limits the scattering of cutting chips.
(3) The power circular saw 1 includes the dust collector case 13c, which is attachable to the pipe 13a that extends from the upper cover 11. The dust collector case 13c further limits the scattering of cutting chips and improves the working efficiency.
(4) The relatively large dust collector case 13c is located at the side of the grip 3 opposite to the circular sawblade 7. Thus, the dust collector case 13c is not located on the side where the upper cover 11 (circular sawblade 7) is located. This limits contact of the dust collector case 13c with a wall or a workpiece at the side where the upper cover 11 (circular sawblade 7) is located, and the dust collector case 13c does not adversely affect the working efficiency.

It should be apparent to those skilled in the art that the present invention may be embodied in many other specific forms without departing from the spirit or scope of the invention. Particularly, it should be understood that the present invention may be embodied in the following forms.

In the above embodiment, the pipe 13a traverses the lower side of the grip 3, that is, the opening 3a. However, the pipe 13a is not restricted to such a structure.

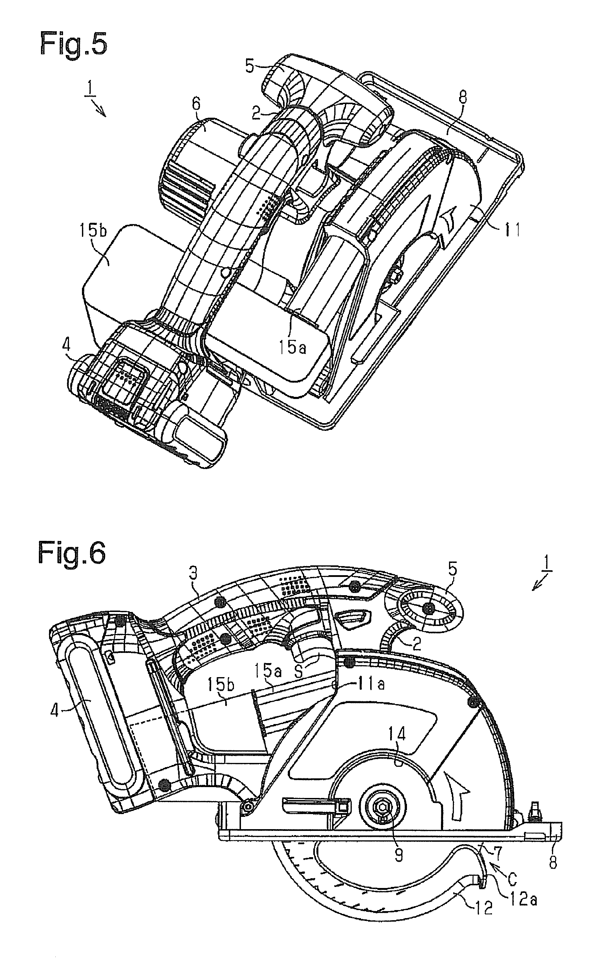

For example, as illustrated in Figs. 5 to 7, the power circular saw 1 may include a pipe 15a. For example, the pipe 15a is a straight pipe. In this structure, instead of the pipe 15a, a dust collector case 15b traverses the lower side of the grip 3 (i.e., opening 3a). In this modified example, the pipe 15a and the dust collector case 15b may form a cutting chip passage.

In the above embodiment, the pipe 13a and the dust collector case 13c form the cutting chip passage. Instead, for example, the cutting chip passage may be formed by only the pipe 13a.

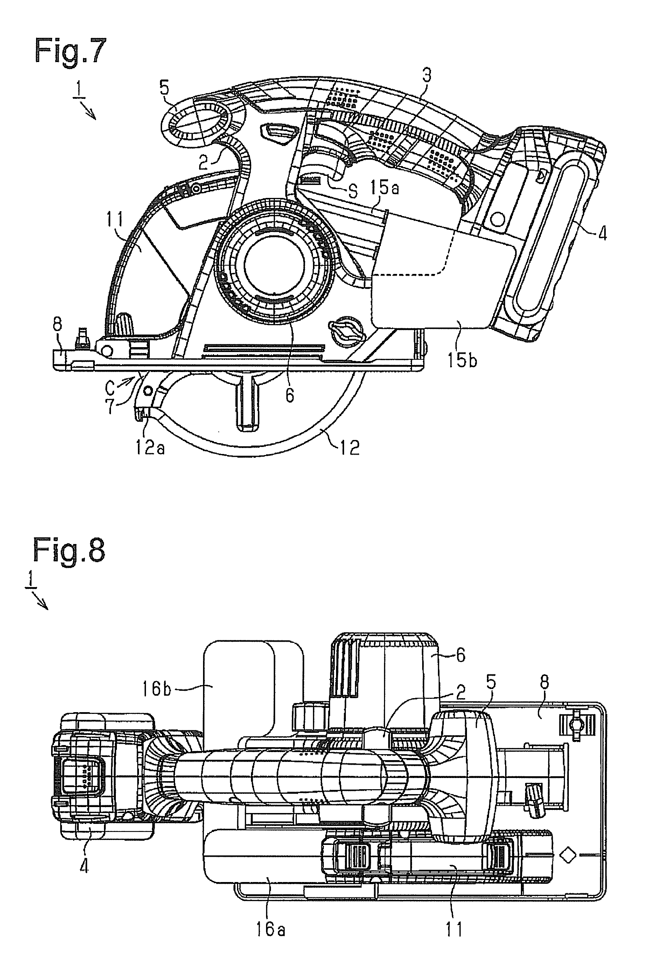

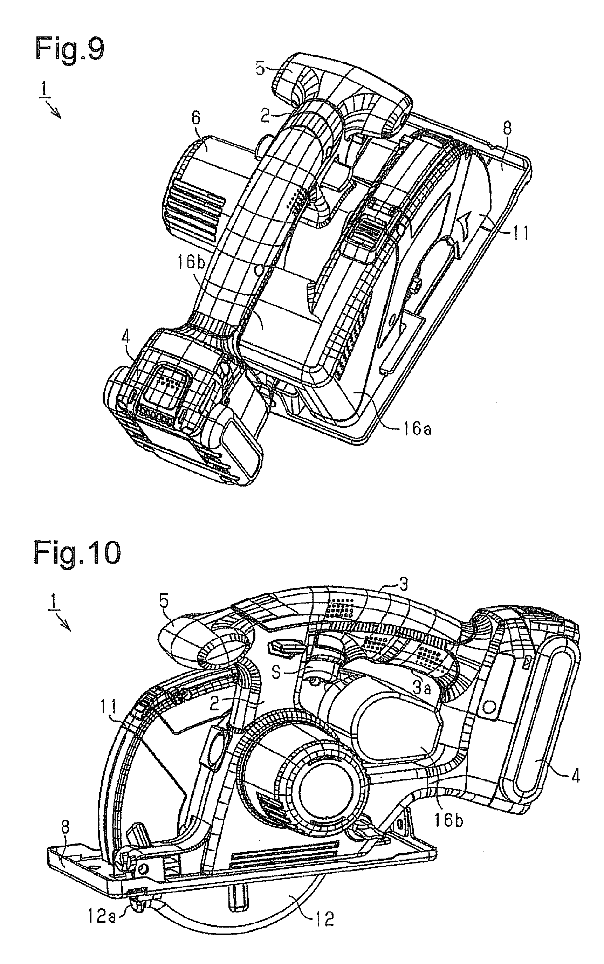

Further, as illustrated in Figs. 8 to 10, the cutting chip passage may be formed by dust collector cases 16a and 16b, which are coupled to traverse the lower side of the grip 3 (i.e., opening 3a). The dust collector case 16b is formed to be coupled in a removable manner to the dust collector case 16a.

The above embodiment and the above modified examples may be combined with one another.

The present disclosure includes the embodiments described below.

### Embodiment 1

A power circular saw (1) includes a motor (6), a circular sawblade (7) configured to be driven and rotated by the motor (6), a cutting chip passage (13a; 13a,13c; 15a,15b; or 16a,16b) through which cutting chips pass when the circular sawblade (7) performs cutting, and a grip (3) extending in a cutting direction of the circular sawblade (7). The cutting chip passage (13a; 13a,13c; 15a,15b; or 16a,16b) is arranged to traverse a lower side (3a) of the grip (3) in a direction intersecting the direction in which the grip (3) extends.

### Embodiment 2

The cutting chip passage (13a; 13a,13c; 15a,15b; or 16a,16b) extends from a protection cover (11) that covers an upper side of the circular sawblade (7).

### Embodiment 3

The cutting chip passage (13a; or 13a,13c) includes a pipe (13a) extending from the protection cover (11). The pipe (13a) includes an open end (13b) extending in a direction intersecting the direction in which the grip (3) extends. The pipe (13a) is arranged to traverse the lower side (3a) of the grip (3).

### Embodiment 4

The cutting chip passage (13a,13c; or 15a,15b) includes a pipe (13a; 15a) extending from the protection cover (11) and a dust collector case (13c; 15b) attached to an end of the pipe (13a; 15a).

### Embodiment 5

The dust collector case (13c; 15b) is located at the side of the grip (3) opposite to the circular sawblade (7).

### Embodiment 6

The cutting chip passage (16a,16b) is a dust collector case (16a,16b) that extends from the protection cover (11) and is able to contain the cutting chips.

### Embodiment 7

The dust collector case (16a,16b) includes a first dust collector case (16a) attached to the protection cover (11) and a second dust collector case (16b) coupled in a removable manner to the first dust collector case (16a).

## Claims

1. A power circular saw (1) comprising:
a motor (6);
a circular sawblade (7) configured to be driven and rotated by the motor (6);
a cutting chip passage (13a; 13a,13c; 15a,15b; or 16a,16b) through which cutting chips pass when the circular sawblade (7) performs cutting; and
a grip (3) extending in a cutting direction of the circular sawblade (7),
the power circular saw (1) **characterized in that**
the cutting chip passage (13a; 13a,13c; 15a,15b; or 16a,16b) is arranged to traverse a lower side (3a) of the grip (3) in a direction intersecting the direction in which the grip (3) extends.

2. The power circular saw (1) according to claim 1, **characterized in that** the cutting chip passage (13a; 13a,13c; 15a,15b; or 16a,16b) extends from a protection cover (11) that covers an upper side of the circular sawblade (7).

3. The power circular saw (1) according to claim 2, **characterized in that**:
the cutting chip passage (13a; or 13a,13c) includes a pipe (13a) extending from the protection cover (11);
the pipe (13a) includes an open end (13b) extending in a direction intersecting the direction in which the grip (3) extends; and
the pipe (13a) is arranged to traverse the lower side (3a) of the grip (3).

4. The power circular saw (1) according to claim 2, **characterized in that** the cutting chip passage (13a,13c; or 15a,15b) includes
a pipe (13a; 15a) extending from the protection cover (11), and
a dust collector case (13c; 15b) attached to an end of the pipe (13a; 15a).

5. The power circular saw (1) according to claim 4, **characterized in that** the dust collector case (13c; 15b) is located at the side of the grip (3) opposite to the circular sawblade (7).

6. The power circular saw (1) according to claim 2, **characterized in that** the cutting chip passage (16a,16b) is a dust collector case (16a,16b) that extends from the protection cover (11) and is able to contain the cutting chips.

7. The power circular saw (1) according to claim 6, **characterized in that** the dust collector case (16a,16b) includes
a first dust collector case (16a) attached to the protection cover (11), and
a second dust collector case (16b) coupled in a removable manner to the first dust collector case (16a).
